# EUROPÄISCHE PATENTSCHRIFT

(11) **EP 2 992 748 B1**
(45) Veröffentlichungstag und Bekanntmachung des Hinweises auf die Patenterteilung: **27.12.2017**
(21) Anmeldenummer: 14003085.9
(22) Anmeldetag: 08.09.2014
(51) Int. Cl.: A01C 23/00

(54) **Verfahren zum Ausbringen von Flüssigmist**
Method for the application of liquid manure
Procédé d'épandage de lisier

(43) Veröffentlichungstag der Anmeldung: 09.03.2016
(73) Patentinhaber: Josef Kotte Landtechnik GmbH & Co. KG, 49597 Rieste (DE)
(72) Erfinder: Kotte, Stefan, 48151 Münster (DE); Barlage, W., 49626 Berge (DE)
(74) Vertreter: Weeg, Thomas

(56) Entgegenhaltungen:
- EP-A2- 0 282 639
- WO-A1-2011/063814
- DE-A1- 4 430 072
- DE-A1-102007 053 114
- DE-A1-102009 045 744

## Beschreibung

Die vorliegende Erfindung bezieht sich auf ein Verfahren zum Ausbringen von Flüssigmist nach dem Oberbegriff des Anspruchs 1.
Aus der Schrift DE 195 14 223 A1 ist es bekannt, Leitrechner zur Vernetzung und Optimierung landwirtschaftlicher Maschinen einzusetzen, wobei von den bearbeiteten Flächen Schlagkarten angelegt werden, in denen die Schlaggrenzen erfasst und teilflächenspezifische Daten gespeichert sind. Als Daten werden unter anderem auch die Ausbringmengen von Klärschlamm, Gülle und Kompost genannt. Auf Basis dieser Schlagkarten können nachfolgende Bearbeitungen der Schläge mit landwirtschaftlichen Maschinen über einen Leitrechner geplant und optimiert werden.
Aus der Schrift DE 10 2010 053 331 A1 ist es bekannt, Transporte landwirtschaftlicher Produkte durch eine Vernetzung einer Arbeitsmaschine mit einem LKW zu optimieren, indem der Füllungsgrad eines Bunkers laufend überwacht und ein Umladeort bestimmt wird.
Ein Routenplanungssystem wird beispielsweise in der EP 0 821 296 A2 beschrieben. Hierbei werden durch Abfahren oder Ablaufen der Feldumrandung mit einem GPS-Gerät die Koordinaten für die Feldumrandung aufgezeichnet und es werden weitere arbeitsfahrzeugspezifische Daten, insbesondere die Arbeitsbreite, eingegeben. Mit einer elektronischen Datenverarbeitungseinrichtung wird dann anhand eines bestimmten Berechnungsalgorithmusses der Verlauf des Bearbeitungsfahrwegs in Form einer digitalisierten Bearbeitungsroute generiert, wobei ein bestimmtes Optimierungskriterium für die Bearbeitungsroute beachtet wird.

Die Schriften aus dem Stand der Technik befassen sich immer nur in allgemeiner Form mit der Planung und Optimierung von Arbeitsvorgängen auf landwirtschaftlichen Flächen. Speziell für die Ausbringung von Flüssigmist fehlen konkrete Vorschläge, wie die Ausbringung von Flüssigmist optimiert werden könnte.

Ein gattungsgemäßes Verfahren zur Ausbringung von Gülle ist aus der Schrift DE 44 30 072 A1 bekannt. Dort ist offenbart, für die Mengenregelung zur Ausbringung von Gülle einen Soll-Durchflussmengenwert aus betriebsrelevanten Eingabedaten zu berechnen, wobei das Steuergerät aus einer Eichkurve oder -tabelle die zugehörige Soll-Stellung des Stellgliedes ermittelt und das Stellglied in diese Soll-Stellung bringt.

In allgemeinerer Form befassen sich die Schriften WO 2011/063814 und EP 0 282 639 A2 mit der Routenplanung von Landmaschinen auf Ackerböden, die Schrift DE 10 2007 053 114 A1 befasst sich mit der Steuerung einer landwirtschaftlichen Feldspritze.

Es ist die Aufgabe der vorliegenden Erfindung, ein optimiertes Verfahren für die Ausbringung von Flüssigmist vorzuschlagen.

Die Aufgabe wird für ein gattungsgemäßes Verfahren durch die kennzeichnenden Merkmale des Anspruchs 1 gelöst.

Durch das erfindungsgemäße Verfahren ist es möglich, ein Reichweitenmanagement für einen Flüssigmistbehälter zu realisieren. Die im Flüssigmistbehälter aktuell vorhandene Menge an Flüssigmist wird mit einer solchen Ausbringungsrate ausgebracht, dass sie jedenfalls bis zu dem Ende der aktuell verbleibenden Schlaglänge reicht, aber nach Möglichkeit auch keine oder nur geringe Restmengen im Flüssigmistbehälter übrig sind, wenn das Ende der Schlaglänge erreicht ist, und gleichwohl über die Länge der verbleibenden Schlaglänge hinweg die Ausbringmenge gleichmäßig bleibt, wobei wegen unterschiedlicher Bodenverhältnisse geplante Schwankungen in der Ausbringmenge entsprechend beibehalten werden können.

Durch die frühe Bestimmung der Ausbringmenge, mit der mit dem vorhandenen Vorrat an Flüssigmist das Ende der aktuell verbleibenden Schlaglänge bei gleich bleibender Ausbringmenge erreicht werden kann, wird vermieden, dass möglicherweise erst kurz vor dem Ende des Ausbringprozesses bemerkt wird, dass bei gleich bleibender Ausbringmenge die noch vorhandene Menge an Flüssigmist nicht ausreicht, und dann die Ausbringmenge deutlich reduziert wird, wodurch die Pflanzen, die in dem Bereich der reduzierten Ausbringmenge wachsen, eine schlechtere Nährstoffversorgung bekommen, woraus sich Ertragseinbußen ergeben. Es wird auch vermieden, dass unbemerkt Leerfahrten gemacht werden, bei denen kein Flüssigmist mehr ausgebracht wird, weil der Flüssigmistbehälter zuvor bereits entleert worden ist. Mehr zufallsabhängige und nur überschlägig getroffene Entscheidungen eines Fahrers des Ausbringfahrzeugs über eine eventuell erforderliche Anpassung der Ausbringmengen und zusätzlicher Überfahrten über den Acker werden durch ein automatisiertes Verfahren ersetzt, das kontinuierlich oder in vorgegebenen Zeitabständen die aktuelle Ausbringmenge überprüft, bei Bedarf anhand konkret berechenbarer Fakten korrigiert und so laufend in vergleichsweise kleinen Regelungsstufen an die herrschenden Verhältnisse anpasst. Trotz der laufenden oder zeitgetakteten Anpassung der Düngemenge an die verfügbaren Restmengen ergibt sich ein immer noch annähernd gleichmäßiges Verteilbild des ausgebrachten Flüssigmists und eine annähernd gleichmäßige Versorgung der Pflanzen mit Nährstoffen und Dünger. Der Fahrer des Ausbringfahrzeugs wird dadurch entlastet, weil er sich besser auf die Steuerung der Maschine konzentrieren kann.

Das erfindungsgemäße Verfahren ermöglicht es, die Zahl der Überfahrten über den Acker und daraus resultierende schädliche Bodenverdichtungen zu minimieren. Außerdem sinkt das Risiko, dass sich Flüssigmistbehälter bei unnötigen Rangierarbeiten festfahren könnten. Ein mehrfaches Überfahren einer Ausbringspur ist seltener erforderlich.

Bei der aktuell verbleibenden Schlaglänge handelt es sich um einen Entfernungswert, der vom Bediener oder von der Recheneinheit vorgegeben wird. Der Bediener kann einen Schätzwert eingeben, der Bediener kann die verbleibende Schlaglänge anhand einer Karte des zu bearbeitenden Feldes ermittelt haben, oder die Recheneinheit hat die verbleibende Schlaglänge anhand elektronischer Schlagkarten und/oder einer vorgegebenen Fahrgassenplanung mit einer integrierten Ermittlung der aktuellen Position elektronisch ermittelt und den mittels einer geeigneten Software ermittelten Wert automatisch oder nach Quittierung durch den Fahrer für die folgende Berechnung einer geeigneten Ausbringmenge übernommen. Bei der aktuell verbleibenden Schlaglänge kann es sich beispielsweise um die Ausbringstrecke handeln, die noch zurückgelegt werden muss, um das nächste am Feldrand stehende Tankfahrzeug zu erreichen, von dem die nächste Gülleladung in den Flüssigmistbehälter überladen wird, oder es handelt sich um die Reststrecke, die zurückgelegt werden muss, um das aktuell bearbeitete Feld zu Ende zu bearbeiten.

Durch die Übermittlung des aktuell im Flüssigmistbehälter vorhandenen Füllvolumens wird die Ausbringmenge nicht auf der Basis theoretischer Annahmen oder ungenauer Schätzungen errechnet, sondern die Berechnung fußt auf der aktuell gemessenen tatsächlich vorhandenen Menge an Flüssigmist im Behälter. Diese Ist-Menge wird mit der aktuell verbleibenden Schlaglänge verrechnet. Bei der Verrechnung kann die eingesetzte Arbeitsbreite der Ausbringetechnik berücksichtigt werden.

Erfindungsgemäß ist die Ausbringetechnik auf einen ersten Wert für die Ausbringmenge eingestellt, die Recheneinheit verrechnet die aktuell eingestellte Ausbringmenge mit dem aktuell im Flüssigmistbehälter vorhandenen Füllvolumen in einen Prognosewert über die Restreichweite des vorhandenen Füllvolumens, vergleicht den Prognosewert für die Restreichweite mit der restlichen Länge des noch zu bearbeitenden Schlages, und sie errechnet in dem Fall, in dem die Restreichweite ungleich der restlichen Länge des noch zu bearbeitenden Schlages ist, einen neuen Wert für die Ausbringmenge, bei dessen Einstellung sich der Prognosewert für die Restreichweite an den Wert der restlichen Länge des noch zu bearbeitenden Schlages annähert. Dieses Verfahren beschreibt die Berechnungsweise, wie für eine eingestellte Ausbringmenge eine Reichweitenprognose erstellt, diese mit der restlichen Länge des noch zu bearbeitenden Schlages verglichen wird und bei einer Differenz zwischen der prognostizierten Restreichweite und der Ist-Länge des noch zu bearbeitenden Schlages eine Korrektur des Wertes für die Ausbringmenge erfolgt, durch die sich die Differenz zwischen den Soll- und Ist-Werten verringert. Bei einer laufenden Wiederholung dieses Verfahrens während des Ausbringens des Flüssigmists ist eine ständige Nachführung der Ausbringmenge des Flüssigmists möglich, so dass der noch vorhandenen Vorrat bei dieser Ausbringmenge für die Länge des noch zu bearbeitenden Schlages ausreicht, wobei geringfügige Abweichungen von einigen Metern ohne Belang sind.

Nach einer Ausgestaltung der Erfindung vergleicht die Recheneinheit den neuen Wert für die Ausbringmenge mit einem vorgegebenen Sollwert, und
- übernimmt automatisch den neuen Wert als Wert für die aktuell eingestellte Ausbringmenge und stellt die Ausbringetechnik auf den neuen Wert ein, wenn die Abweichung vom Sollwert in einem als akzeptabel vordefinierten Bereich liegt, oder
- gibt ein Warnsignal aus, wenn die Abweichung in einem nicht akzeptablen Bereich liegt.
Mit dem Sollwertabgleich wird sichergestellt, dass ein neuer Wert für die aktuell eingestellte Ausbringmenge nicht unter eine Mindestausbringmenge fällt, bei der die Pflanzen nicht mehr genügend Nahrung erhalten, oder über eine maximale Ausbringmenge ansteigt, bei der der Boden mit den Ausbringmengen belastet wird, weil die Pflanzen die darin enthaltenen Nährstoffe nicht mehr umsetzen können.

Nach einer Ausgestaltung der Erfindung wird die aktuell verbleibende Schlaglänge aus einer vorgegebenen in einer Schlagkarte geplanten Bearbeitungsroute ermittelt. Da moderne Landmaschinen häufig mit GPS-gestützten Navigationssystemen arbeiten, in denen die Umrisse und die Geländekontur des zu bearbeitenden Bodens sowie die geplante Route elektronisch gespeichert sind, bleibt der Mehraufwand für ein solches System überschaubar, die Prognosequalität zur Reichweite des im Flüssigmistbehälter befindlichen Flüssigmists unter Beibehaltung der aktuellen Ausbringmenge und unter Zugrundelegung des neuen Wertes für die Ausbringmenge verbessert sich im Verhältnis dazu allerdings sehr deutlich.

Nach einer Ausgestaltung der Erfindung ermittelt die Recheneinheit für die Bearbeitung eines gesamten Schlages mit der Ausbringung mehrerer Füllungen des Flüssigmistbehälters die sich aus der geplanten Bearbeitungsroute ergebende Gesamtschlaglänge, teilt die Gesamtschlaglänge auf einzelne Füllungen des Flüssigmistbehälters unter Berücksichtigung einer vorgegebenen Sollausbringmenge auf und ermittelt für jede Füllung für eine auf diese Füllung entfallende Schlaglänge eine geeignete Ausbringmenge. Durch dieses Verfahren ist es möglich, eine für jede einzelne Füllung planbare Schlaglänge zu ermitteln, indem bei der Planung die Sollausbringmenge berücksichtigt wird. Sodann können die für jede Füllung ermittelten planbaren Schlaglängen addiert und mit der Gesamtschlaglänge verglichen werden. Eine dabei eventuell ermittelte Differenz kann dazu genutzt werden, die Ausbringmengen für die jeweiligen Füllungen abweichend von der Sollausbringmenge zu bestimmen, um dadurch die Routenführung für die Gesamtschlaglänge zu optimieren. So kann durch eine leichte Absenkung der Ausbringmenge für eine Füllung die für diese Füllung erzielbare Schlaglänge so weit gestreckt werden, dass mit der letzten Fahrgasse der Feldrand und das Ende dieser Fahrgasse erreicht wird, an dem der Flüssigmistbehälter wieder neu aufgefüllt werden kann. Wenn allerdings die Ausbringmenge dabei unter einen vorgegebenen Grenzwert abgesenkt werden würde, kann auch die für diese Füllung planbare Schlaglänge um die Länge der nicht vollständig ohne eine Reduzierung der für diese Füllung vorzugebenden Ausbringmenge abarbeitbaren Fahrgasse reduziert werden, um sodann die für die anderen Füllungen planbaren Schlaglängen entsprechend anzupassen und die für diese Schlaglängen zu planenden Ausbringmengen zu optimieren. Durch eine mehrfache Iteration dieser Optimierungen der planbaren Schlaglängen für die einzelnen Füllungen und die jeweils zur weiteren Optimierung angepassten jeweiligen Ausbringmengen kann eine Routenplanung für die Gesamtschlaglänge erstellt werden, bei der unnötige Fahrten auf dem Feld vermieden, das Füllvolumen des Flüssigmistbehälters optimal ausgenutzt und die Neubefüllungen des Flüssigmistbehälters an Positionen des Feldes durchgeführt werden können, die für die Tankfahrzeuge gut erreichbar sind. Auch die jeweils an den Nachfüllpositionen erforderlichen Füllmengen und Bereitstellungszeiten ergeben sich aus der Routenplanung, so dass auch die Logistik für die Nachfüllmengen auf Basis dieser Daten optimiert werden kann. Durch die Befüllung des Flüssigtankbehälters nur mit den jeweils im Rahmen der Planung ermittelten benötigten Füllmengen wird die Mitnahme nicht benötigter Flüssigmengen vermieden, dadurch sinkt die Bodenbelastung durch ein niedrigeres Gewicht des Flüssigmistbehälters, und es kann Kraftstoff für die Bewegung des Flüssigmistbehälters über das Feld eingespart werden.

Nach einer Ausgestaltung der Erfindung werden bei der Routenplanung durch die Rechnereinheit vorgegebene Optimierungskriterien berücksichtigt. Als Optimierungskriterien können beispielsweise ein oder mehrere schlagspezifische Überladepunkte für Nachfüllmengen, Gewichtsbeschränkungen für den Flüssigmistbehälter zur Bodenschonung und Befahrbarkeit des Feldes, Zeitvorgaben für die Ausbringung einer Füllung und dergleichen berücksichtigt werden. Die Optimierungskriterien können sich auch auf die jeweilige Ausgabemenge beziehen. Als Optimierungskriterien kommen hier Limits für die minimale und die maximale Ausbringmenge, boden- und/oder ortspezifische Steigerungen oder Verminderungen der Ausbringmenge, beispielsweise in ertragsstärkeren und ertragsschwächeren Bereichen eines Feldes oder an Wasserschutzzonen angrenzende Feldabschnitte, in Betracht.

Nach einer Ausgestaltung der Erfindung ermittelt die Recheneinheit die auf dem Vorgewende zu fahrenden Wendestrecken und diese bleiben bei der Ermittlung der verbleibenden Schlaglänge unberücksichtigt. Da in den Wendezonen kein Flüssigmist ausgebracht wird, können diese bei der Ermittlung der verbleibenden Schlaglänge unberücksichtigt bleiben. Die auf den Wendestrecken benötigten Fahrzeiten können in der Routenplanung berücksichtigt werden. Die Länge der Wendestrecken und die Zahl der auszuführenden Wendemanöver kann im Rahmen der Routenplanung ebenfalls nach vorgegebenen Kriterien optimiert werden, wobei beispielsweise der Planer der Routenplanung oder der Fahrer des Ausbringfahrzeugs die von ihm gewünschte Breite des Vorgewendes angeben kann oder die Recheneinheit softwaregestützt eine breite des Vorgewendes automatisch berücksichtigt oder die breite beispielsweise anhand der Länge der Maschine oder dem von der Maschine benötigten Wenderadius bestimmt.

Nach einer Ausgestaltung der Erfindung ermittelt die Recheneinheit einen Vorschlag für eine Bearbeitungsroute, gibt diesen an einen Benutzer aus und der Benutzer der Recheneinheit kann Optimierungsvorgaben für eine von der Recheneinheit daraus zu ermittelnde veränderte Bearbeitungsroute eingeben. Durch die kombinierte automatische und benutzerkontrollierte Routenplanung ist es möglich, zunächst vereinfacht einen ersten automatisiert erstellten Vorschlag für eine Routenplanung zu erstellen, um diesen sodann durch wissens- und/oder erfahrungsbasierte Optimierungsvorgaben eines Benutzers zu verbessern, um im Ergebnis eine Planung für eine optimale Routenführung zu erhalten. Die automatisierte Erstellung eines ersten Vorschlags entlastet einen Benutzer von Routinearbeiten, dafür hat er die Gelegenheit, bei der Eingabe seiner Optimierungsvorgaben sein Wissen und seine Erfahrung gezielt einzubringen.

Nach einer Ausgestaltung der Erfindung ermittelt die Recheneinheit voraussichtliche Zeitpunkte für eine erneute Befüllung des Flüssigmistbehälters und gibt diese Zeitpunkte an einen Bediener aus. Hierdurch wird die Logistik für die Anlieferung der Nachfüllmengen an Flüssigmist optimiert. Die jeweils erforderlichen Fahrten von Tankwagen können bei der Planung berücksichtigt werden. Anhand der genauen Zeiten kann geprüft werden, wie viele Tankfahrzeuge gleichzeitig benötigt werden, wenn das Ausbringfahrzeug mit höchster Geschwindigkeit fährt, oder die Fahrgeschwindigkeit des Ausbringfahrzeugs kann vermindert werden, wenn nur beschränkt viele Tankfahrzeuge verfügbar sind.

Nach einer Ausgestaltung der Erfindung übermittelt die Recheneinheit Lenk- und/oder Geschwindigkeitssignale an das Fahrassistenzsystem einer den Flüssigmistbehälter ziehenden Zugmaschine. Durch die Übermittlung von Lenk- und/oder Geschwindigkeitssignalen können beispielsweise Wendevorgänge optimiert werden, die Feinsteuerung des Ausbringfahrzeugs für einen möglichst nahtlosen und überlappungsfreien Anschluss einer Fahrgasse an die nächste benachbarte Fahrgasse kann automatisiert erfolgen, beispielsweise über eine GPS-Lenkung in Verbindung mit einem Referenzsignal, oder die Fahrgeschwindigkeit des Ausbringefahrzeugs wird an den voraussichtlichen Verfügbarkeitszeitpunkt des nächsten Tankfahrzeugs angepasst.

Nach einer Ausgestaltung der Erfindung schaltet die Recheneinheit bei einzelnen Fahrgassen Teilarbeitsbreiten der Ausbringetechnik ab. Stellt die Recheneinheit fest, dass die vorhandene Restmenge im Flüssigmistbehälter unter Zugrundelegung einer Mindestausbringmenge nicht ausreicht, dass eine Fahrgasse bei Nutzung der vollen Arbeitsbreite der Ausbringetechnik bis zum Endpunkt befahren werden kann, die Fahrgasse aber bei Abgabe zumindest der Mindestausbringmenge bis zum Endpunkt befahren werden kann, wenn ein Teil der Arbeitsbreite der Ausbringetechnik abgeschaltet wird, kann es sinnvoll sein, für eine Fahrgasse die Ausbringetechnik nur über eine Teilarbeitsbreite Flüssigmist ausbringen zu lassen, da dann der Flüssigmistbehälter ganz oder nahezu ganz leer gefahren werden kann, die Mindestausbringmenge eingehalten wird und immer noch der Endpunkt der Fahrgasse erreicht wird, aber ein erneutes Befahren einer Teilstrecke oder der vollen Länge dieser Fahrgasse nicht erforderlich ist, weil die Fahrgasse zumindest über die noch aktive Teilarbeitsbreite der Ausbringetechnik über ihre volle Länge hinweg mit Flüssigmist in der gewünschten Mindestausbringmenge versorgt worden ist. Die nächste Fahrgasse kann dann über ihre volle Länge an die Außenkante der mit der Teilarbeitsbreite bearbeiteten Ackerfläche direkt anschließen, nach einer erneuten Befüllung des Flüssigmistbehälters auch wieder über die volle Arbeitsbreite der Ausbringetechnik.

## Patentansprüche

1. Verfahren zum Ausbringen von Flüssigmist mit einem fahrbaren Flüssigmistbehälter und einer daran angeschlossenen Ausbringetechnik zum Ausbringen des Flüssigmistes auf einem Feld, wobei die von der Ausbringtechnik ausbringbare Ausbringmenge an Flüssigmist über eine mit der Ausbringetechnik verbundene Recheneinheit verstellbar ist, der Recheneinheit
- Informationen über das aktuell im Flüssigmistbehälter vorhandene Füllvolumen übermittelt sind,
- Informationen über die aktuell verbleibende Schlaglänge vom Bediener oder von der Recheneinheit als Entfernungswert vorgegeben sind,
die Recheneinheit die Daten über das aktuell im Flüssigmistbehälter vorhandene Füllvolumen und die aktuell verbleibende Schlaglänge in einen Wert für die durchschnittliche Ausbringmenge verrechnet und die Recheneinheit die Ausbringmenge auf den errechneten Wert einstellt, **dadurch gekennzeichnet, dass** die Ausbringetechnik auf einen ersten Wert für die Ausbringmenge eingestellt ist, die Recheneinheit die aktuell eingestellte Ausbringmenge mit dem aktuell im Flüssigmistbehälter vorhandenen Füllvolumen in einen Prognosewert über die Restreichweite des vorhandenen Füllvolumens verrechnet, den Prognosewert für die Restreichweite mit der restlichen Länge des noch zu bearbeitenden Schlages vergleicht und sie in dem Fall, in dem die Restreichweite ungleich der restlichen Länge des noch zu bearbeitenden Schlages ist, einen neuen Wert für die Ausbringmenge errechnet, bei dessen Einstellung sich der Prognosewert für die Restreichweite an den Wert der restlichen Länge des noch zu bearbeitenden Schlages annähert.

2. Verfahren nach Anspruch 1, **dadurch gekennzeichnet, dass** die Recheneinheit den neuen Wert für die Ausbringmenge mit einem vorgegebenen Sollwert vergleicht, und
- automatisch den neuen Wert als Wert für die aktuell eingestellte Ausbringmenge übernimmt und die Ausbringetechnik auf den neuen Wert einstellt, wenn die Abweichung vom Sollwert in einem als akzeptabel vordefinierten Bereich liegt, oder
- ein Warnsignal ausgibt, wenn die Abweichung in einem nicht akzeptablen Bereich liegt.

3. Verfahren nach einem der vorhergehenden Ansprüche, **dadurch gekennzeichnet, dass** die aktuell verbleibende Schlaglänge aus einer vorgegebenen in einer Schlagkarte geplanten Bearbeitungsroute ermittelt wird.

4. Verfahren nach Anspruch 3, **dadurch gekennzeichnet, dass** die Recheneinheit für die Bearbeitung eines gesamten Schlages mit der Ausbringung mehrerer Füllungen des Flüssigmistbehälters die sich aus der geplanten Bearbeitungsroute ergebende Gesamtschlaglänge ermittelt, die Gesamtschlaglänge auf einzelne Füllungen des Flüssigmistbehälters unter Berücksichtigung einer vorgegebenen Sollausbringmenge aufteilt und für jede Füllung für eine auf diese Füllung entfallende Schlaglänge eine geeignete Ausbringmenge ermittelt.

5. Verfahren nach einem der vorhergehenden Ansprüche 3 oder 4, **dadurch gekennzeichnet, dass** bei der Routenplanung durch die Rechnereinheit vorgegebene Optimierungskriterien berücksichtigt werden.

6. Verfahren nach einem der vorhergehenden Ansprüche, **dadurch gekennzeichnet, dass** die Recheneinheit die auf dem Vorgewende zu fahrenden Wendestrecken ermittelt und diese bei der Ermittlung der verbleibenden Schlaglänge unberücksichtigt bleiben.

7. Verfahren nach einem der vorhergehenden Ansprüche, **dadurch gekennzeichnet, dass** die Recheneinheit einen Vorschlag für eine Bearbeitungsroute ermittelt, diesen an einen Benutzer ausgibt und der Benutzer der Recheneinheit Optimierungsvorgaben für eine von der Recheneinheit daraus zu ermittelnde veränderte Bearbeitungsroute eingeben kann.

8. Verfahren nach einem der vorhergehenden Ansprüche, **dadurch gekennzeichnet, dass** die Recheneinheit voraussichtliche Zeitpunkte für eine erneute Befüllung des Flüssigmistbehälters ermittelt und diese Zeitpunkte an einen Bediener ausgibt.

9. Verfahren nach einem der vorhergehenden Ansprüche, **dadurch gekennzeichnet, dass** die Recheneinheit Lenk- und/oder Geschwindigkeitssignale an ein-Fahrassistenzsystem einer den Flüssigmistbehälter ziehenden Zugmaschine übermittelt.

## Claims

1. Method for dispensing liquid manure by means of a mobile liquid manure container and by means of dispensing technology for dispensing the liquid manure on a field, it being possible to adjust the dispensed amount of liquid manure that can be dispensed from the dispensing technology, by means of an arithmetic unit connected to the dispensing technology,
- information concerning the fill volume currently available in the liquid manure container being transmitted to the arithmetic unit,
- information concerning the currently remaining plot length being specified by the user or by the arithmetic unit as a distance value,
the arithmetic unit calculates a value for the average dispensed amount from the data concerning the fill volume currently available in the liquid manure container and the currently remaining plot length and the arithmetic unit sets the dispensed amount to the calculated value, **characterised in that** the dispensing technology is set to a first value for the dispensed amount, the arithmetic unit calculates a predicted value for the remaining range of the available fill volume from the currently set dispensed amount and the fill volume currently available in the liquid manure container, compares the predicted value for the remaining range with the remaining length of the plot still to be processed, and calculates a new value for the dispensed amount if the remaining range is not equal to the remaining length of the plot still to be processed, during the setting of which new value the predicted value for the remaining range approximates the value of the remaining length of the plot still to be processed.

2. Method according to claim 1, **characterised in that** the arithmetic unit compares the new value for the dispensed amount with a specified target value, and
- automatically adopts the new value as the value for the currently set dispensed amount and sets the dispensing technology to the new value if the deviation from the target value is in a range predefined as being acceptable, or
- emits a warning signal if the deviation is in an unacceptable range.

3. Method according to any of the preceding claims, **characterised in that** the currently remaining plot length is determined from a specified processing route planned in a plot map.

4. Method according to claim 3, **characterised in that** the arithmetic unit determines, for the processing of an entire plot by means of the dispensing of a plurality of fills of the liquid manure container, the total plot length arising from the planned processing route, divides the total plot length into individual fills of the liquid manure container while taking into account a specified target dispensed amount, and determines a suitable dispensed amount for each fill for a plot length allotted to said fill.

5. Method according to any of the preceding claims 3 or 4, **characterised in that** the arithmetic unit takes into account specified optimisation criteria during the route planning.

6. Method according to any of the preceding claims, **characterised in that** the arithmetic unit determines the turning distances to be covered on the headland, and said distances are not taken into account when the remaining plot length is determined.

7. Method according to any of the preceding claims, **characterised in that** the arithmetic unit determines a proposal for a processing route and outputs said proposal to a user, and the user can input, into the arithmetic unit, optimisation parameters for a modified processing route to be determined therefrom by the arithmetic unit.

8. Method according to any of the preceding claims, **characterised in that** the arithmetic unit determines anticipated points in time for refilling the liquid manure container and outputs said points in time to a user.

9. Method according to any of the preceding claims, **characterised in that** the arithmetic unit transmits steering and/or speed signals to a driver assistance system of a tractor towing the liquid manure container.

## Revendications

1. Procédé d'épandage de fumier liquide au moyen d'un réservoir de fumier liquide mobile et de moyens techniques d'épandage reliés à celui-ci et destinés à l'épandage du fumier sur un champ, la quantité d'épandage de fumier liquide pouvant être épandu par les moyens techniques d'épandage étant réglable par l'intermédiaire d'une unité de calcul reliée aux moyens techniques d'épandage,
- des informations sur le volume de remplissage actuel du réservoir de fumier liquide étant transmises à l'unité de calcul,
- des informations sur la longueur de parcelle actuellement restante étant prescrites par l'opérateur ou par l'unité de calcul en tant que valeur de distance,
l'unité de calcul calculant les données sur le volume de remplissage actuellement présentant dans le réservoir de fumier liquide et sur la longueur de parcelle actuellement restante sous la forme d'une valeur de la quantité d'épandage moyenne et l'unité de calcul réglant la quantité d'épandage à la valeur calculée, **caractérisé en ce que** les moyens techniques d'épandage calculent la quantité d'épandage actuellement réglée avec le volume de remplissage actuellement présent dans le réservoir de fumier liquide sous la forme d'une valeur de pronostic sur la zone restant à couvrir du volume de remplissage présent, **en ce qu'**ils comparent la valeur de pronostic de la zone restant à couvrir avec la longueur restante de la parcelle encore à traiter et **en ce que**, dans le cas où la zone restant à couvrir n'est pas égale à la longueur restante de la parcelle encore à traiter, ils calculent une nouvelle valeur de la quantité d'épandage pour le réglage de laquelle la valeur de pronostic de la zone restant à couvrir s'approche de la valeur de la longueur restante de la parcelle encore à traiter.

2. Procédé selon la revendication 1, **caractérisé en ce que** l'unité de calcul compare la nouvelle valeur de la quantité d'épandage avec une valeur de consigne prescrite, et
- adopte automatiquement la nouvelle valeur en tant que valeur de la quantité d'épandage actuellement réglée et règle les moyens techniques d'épandage à la nouvelle valeur si l'écart par rapport à la valeur de consigne se trouve dans une zone prédéfinie acceptable, ou
- émet un signal d'avertissement si l'écart se trouve dans une zone non acceptable.

3. Procédé selon l'une des revendications précédentes, **caractérisé en ce que** la longueur de parcelle actuellement restante est déterminée à partir d'un parcours de traitement prescrit planifié à partir d'une carte de parcelles.

4. Procédé selon la revendication 3, **caractérisé en ce que** l'unité de calcul détermine, pour le traitement d'une parcelle complète avec l'épandage de plusieurs remplissages de réservoir de fumier liquide, la longueur de parcelle totale résultant du parcours de traitement planifié, partage la longueur de parcelle totale en remplissages individuels de réservoir de fumier liquide en prenant en compte une quantité d'épandage de consigne prescrite et détermine une quantité d'épandage appropriée pour chaque remplissage et pour une longueur de parcelle associée à ce remplissage.

5. Procédé selon l'une des revendications précédentes 3 ou 4, **caractérisé en ce que** des critères d'optimisation prescrits par l'unité de calcul sont pris en compte lors de la planification d'un parcours.

6. Procédé selon l'une des revendications précédentes, **caractérisé en ce que** l'unité de calcul détermine les distances de retournement à parcourir en tournière et celles-ci ne sont pas prises en compte lors de la détermination de la longueur de parcelle restante.

7. Procédé selon l'une des revendications précédentes, **caractérisé en ce que** l'unité de calcul détermine une proposition de parcours de traitement, délivre celle-ci à un utilisateur et l'utilisateur de l'unité de calcul peut entrer des directives d'optimisation pour un parcours de traitement modifié à déterminer par l'unité de calcul.

8. Procédé selon l'une des revendications précédentes, **caractérisé en ce que** l'unité de calcul détermine des instants estimés pour un nouveau remplissage du réservoir de fumier liquide et délivre ces instants à un utilisateur.

9. Procédé selon l'une des revendications précédentes, **caractérisé en ce que** l'unité de calcul transmet des signaux de vitesse et/ou de direction à un système d'aide à la conduite d'un tracteur tirant le réservoir de fumier liquide.
